# FASCICULE DE BREVET EUROPEEN

(11) **EP 4 072 878 B1**
(45) Date de publication et mention de la délivrance du brevet: **20.08.2025**
(21) Numéro de dépôt: 20828548.6
(22) Date de dépôt: 02.12.2020
(51) Int. Cl.: B60H 1/22, F24H 1/00, F24H 1/10, H05B 3/06, H05B 3/82

(54) **DISPOSITIF DE CHAUFFAGE ÉLECTRIQUE, NOTAMMENT POUR VÉHICULE AUTOMOBILE**
ELEKTRISCHE HEIZVORRICHTUNG, INSBESONDERE FÜR EIN KRAFTFAHRZEUG
ELECTRICAL HEATING DEVICE, IN PARTICULAR FOR A MOTOR VEHICLE

(30) Priorité: 12.12.2019 FR 1914261
(43) Date de publication de la demande: 19.10.2022
(73) Titulaire: Valeo Systemes Thermiques, 78320 Le Mesnil-Saint-Denis (FR)
(72) Inventeur: FAIVRE, Arnaud, 78320 LE MESNIL SAINT-DENIS (FR); DECOOL, Laurent, 78320 LE MESNIL SAINT-DENIS (FR); COUAPEL, Yann, 78320 LE MESNIL SAINT-DENIS (FR); KARAASLAN, Serif, 78320 LE MESNIL SAINT-DENIS (FR); LAMANDE, Vincent, 78320 LE MESNIL SAINT-DENIS (FR)
(74) Mandataire: Valeo Powertrain Systems
(86) Numéro de dépôt international: PCT/FR2020/052248
(87) Numéro de publication internationale: WO 2021/116563

(56) Documents cités:
- CN-Y- 201 401 951
- GB-A- 2 512 353
- GB-A- 2 537 715
- US-A1- 2011 019 983

## Description

Le domaine de la présente invention est celui des dispositifs électriques de chauffage et de circulation d'un fluide, en particulier d'un liquide, notamment pour une installation de ventilation, de chauffage et/ou de climatisation d'un habitacle d'un véhicule automobile. Plus particulièrement, l'invention porte sur les dispositifs de chauffage électrique utilisés pour de telles installations dans des véhicules automobiles, électriques ou hybrides, équipés d'un réseau d'alimentation électrique à haute tension.

Le chauffage de l'air destiné au traitement thermique de l'habitacle d'un véhicule automobile à moteur thermique est assuré par échange de chaleur entre un flux d'air et un fluide caloporteur tel qu'un liquide, par le biais d'un échangeur thermique. Dans le cas des véhicules hybrides ou électriques, des dispositifs de chauffage électrique sont connus qui forment une source de calories et dans lesquels un courant électrique circule pour monter en température un corps de chauffe s'étendant longitudinalement dans un boitier de ce dispositif de chauffage. Le liquide à chauffer traverse ainsi le dispositif de chauffage électrique et est mis au contact du corps de chauffe. Il s'effectue alors un échange de calories entre le corps de chauffe et le liquide destiné au chauffage de l'habitacle, qui chauffe alors à son tour.

GB2537715A décrit un dispositif de chauffage électrique d'un liquide selon le préambule de la revendication 1.

Le corps de chauffe comporte habituellement au moins un élément électrique chauffant, par exemple une ou plusieurs résistances chauffantes. Afin d'obtenir une puissance de chauffe suffisante pour le fonctionnement souhaité, les éléments électriques chauffants peuvent être multipliés dans un même dispositif de chauffage électrique.

De plus, le boitier peut héberger un circuit électrique portant des composants électriques et permettant notamment de connecter des terminaux électriques de chaque élément électrique chauffant à un système d'alimentation électrique. Il est donc nécessaire de prévoir une séparation étanche entre ce circuit électrique et le circuit du liquide à chauffer.

Selon une solution connue, le dispositif de chauffage électrique comporte un boitier délimitant au moins en partie une chambre de circulation du liquide au sein du boitier. Le dispositif de chauffage électrique comporte une paroi interne, délimitant au moins en partie cette chambre, portant l'élément ou des éléments électriques chauffants, Une telle paroi peut être traversée par les terminaux électriques qui débouchent alors dans une cavité hébergeant le circuit électrique. Il est nécessaire d'assurer l'étanchéité au niveau de cette paroi.

Lorsque plusieurs éléments électriques chauffants, il est avantageux de réaliser la fixation de tous les éléments électriques chauffants sur une même paroi de façon à concentrer les mesures d'étanchéité au niveau de cette paroi. Les éléments électriques chauffants sont donc montés en porte à faux dans le boitier.

En utilisation, le dispositif de chauffage électrique, monté sur un véhicule automobile, voire par exemple au niveau du moteur, est amené à bouger, vibrer, et les différentes pièces du dispositif de chauffage électrique peuvent s'entrechoquer, notamment les éléments électriques chauffants tels que des résistances chauffantes du corps de chauffe entre eux et avec l'intérieur du boitier. Ceci génère du bruit, et de plus peut accélérer la détérioration des pièces qui entrent en contact.

L'invention a pour objectif de pallier au moins partiellement ces problèmes de l'art antérieur en proposant un dispositif de chauffage électrique permettant de limiter le bruit dû aux vibrations susceptibles d'être générées en utilisation dans un véhicule automobile notamment.

À cet effet, l'invention a pour objet un dispositif de chauffage électrique d'un liquide selon la revendication 1.

On assure une liaison mécanique supplémentaire qui vient en complément de la première liaison mécanique, limitant ainsi le porte à faux des éléments électriques chauffants au sein du boitier.

Cette liaison mécanique supplémentaire permet d'absorber les intervalles de tolérances entre les pièces et de limiter la génération de bruit ou vibrations en utilisation dans un véhicule automobile notamment.

La liaison mécanique supplémentaire forme en outre un pont thermique entre l'élément ou les éléments électriques chauffants et le boitier, ce qui permet de mieux mesurer la température des éléments électriques chauffants, même en cas d'absence de liquide dans la chambre. Le liquide est par exemple de l'eau glycolée.

Le dispositif de chauffage électrique peut en outre comporter une ou plusieurs caractéristiques suivantes décrites ci-après, prises séparément ou en combinaison.

Lesdits au moins deux éléments électriques chauffants peuvent être réalisés par des résistances chauffantes.

Selon un exemple, le corps de chauffe comporte un socle fixé au boitier, tel que le boitier et le socle délimitent, au moins en partie, la chambre de circulation du liquide.

La première liaison mécanique est par exemple entre lesdits au moins deux éléments électriques chauffants et le socle. Dans ce cas, la paroi interne portant lesdits au moins deux éléments électriques chauffants est définie par le socle. Il s'agit de la paroi du socle du côté de la chambre de circulation du liquide.

Lesdits au moins deux éléments électriques chauffants comportent deux sections terminales munies d'un terminal électrique par exemple fixées au socle.

Selon un aspect de l'invention, tous les éléments électriques chauffants sont par exemple fixés sur le socle.

De préférence, la deuxième liaison mécanique est assurée par au moins trois points de contact avec chaque élément électrique chauffant.

Au moins l'un des éléments électriques chauffants peut présenter au moins en partie une forme hélicoïdale.

Ledit au moins un élément de liaison mécanique peut être agencé entre la surface interne du boitier et au moins un enroulement de l'élément électrique chauffant ou d'au moins l'un des éléments électriques chauffants.

Selon un exemple, l'élément ou au moins l'un des éléments électriques chauffants comprend une première section terminale, suivie d'une portion intermédiaire, par exemple une portion enroulée, suivie d'une deuxième section terminale rectiligne, la première section terminale et la deuxième section terminale s'étendant entre la portion intermédiaire, la portion intermédiaire étant par exemple une portion enroulée, et le socle.

Ledit au moins un élément de liaison mécanique est par exemple agencé dans la chambre de circulation du liquide à l'opposé du socle.

Selon un exemple de réalisation, au moins l'un des éléments électriques chauffants s'étend longitudinalement dans la chambre de circulation du liquide.

Ledit au moins un élément de liaison mécanique peut être agencé dans la chambre de circulation du liquide en reliant mécaniquement la surface interne du boitier à une extrémité longitudinale d'au moins l'un des éléments électriques chauffants.

Selon un mode de réalisation, le corps de chauffe comprend au moins deux éléments électriques chauffants disposés dans le prolongement axial l'un de l'autre. Les éléments électriques chauffants disposés dans le prolongement axial l'un de l'autre s'enroulent par exemple autour d'un axe commun.

Ledit au moins un élément de liaison mécanique peut être agencé axialement entre les deux éléments électriques chauffants.

Selon un mode de réalisation, les axes d'enroulement des éléments électriques chauffants peuvent être confondus.

Le corps de chauffe comprend par exemple au moins un premier élément électrique chauffant défini par un premier diamètre, et un deuxième élément électrique chauffant défini par un deuxième diamètre inférieur au premier diamètre, tel que le premier élément électrique chauffant est disposé autour du deuxième élément électrique chauffant.

Les premier et deuxième éléments électriques chauffants présentent par exemple au moins en partie une forme hélicoïdale.

Selon un aspect de l'invention, ledit au moins un élément de liaison mécanique est réalisé par une pièce intermédiaire, agencée entre la surface interne du boitier et le corps de chauffe. La pièce intermédiaire est donc une pièce supplémentaire rapportée dans le dispositif de chauffage électrique.

Selon une option, plusieurs points de contact peuvent être réalisés par une seule pièce intermédiaire.

Selon une autre option, plusieurs pièces intermédiaire sont prévues de façon à assurer chacune au moins un point de contact.

La pièce intermédiaire peut être réalisée dans un matériau conducteur thermique, de préférence métallique, de façon à former un pont thermique.

Un tel matériau métallique permet de résister aux températures de fonctionnement des éléments électriques chauffants, tels que des résistances chauffantes, avec lesquels ledit au moins un élément de liaison mécanique est en contact mécanique.

De façon avantageuse, la pièce intermédiaire est au moins en partie élastique et flexible. Ceci donne un effet ressort à la pièce intermédiaire qui permet de compenser les intervalles de tolérances, les débattements ou erreurs dimensionnelles du dispositif de chauffage électrique.

Selon un aspect de l'invention, la pièce intermédiaire comporte une base agencée transversalement en regard d'une extrémité longitudinale de l'un des éléments électriques chauffants, et un nombre prédéfini de pattes de contact s'étendant à partir de la base en direction du corps de chauffe en étant agencées en contact avec l'élément électrique chauffant.

La pièce intermédiaire comporte par exemple au moins trois pattes de contact.

Les pattes de contact peuvent s'étendre en direction du corps de chauffe en étant agencées en contact avec au moins un élément électrique chauffant, sur une même longueur ou des longueurs différentes.

Les pattes de contact peuvent être de toute forme appropriée pour assurer le contact avec un ou plusieurs éléments électriques chauffants. De façon non exhaustive, les pattes de contact peuvent être droites, courbes, voire présenter une surface concave. Les pattes de contact peuvent être inclinées par rapport à l'axe longitudinal des éléments électriques chauffants, par exemple en formant un angle de l'ordre de 30° à 45° avant contact. Les pattes de contact peuvent être alternativement inclinées selon des directions différentes.

L'inclinaison ou la courbure des pattes confère une souplesse à l'assemblage en permettant une déformation de ces pattes de contact lorsque l'élément ou l'un des éléments électriques chauffants vient en appui contre la pièce intermédiaire.

Selon un mode de réalisation, la base de la pièce intermédiaire est agencée en appui contre la surface interne du boitier à l'opposé du socle. Le maintien se fait par le placage de la pièce intermédiaire entre les éléments électriques chauffants et la surface interne opposée au socle du boitier.

Selon une variante, au moins certaines pattes de contact de la pièce intermédiaire peuvent être agencées en contact avec la surface interne du boitier. Par exemple, on peut prévoir une alternance de pattes en contact avec la surface interne du boitier et en contact avec un élément électrique chauffant.

De façon alternative, chacune des pattes de contact agencées entre la surface interne du boitier et un élément électrique chauffant, peut être en contact avec les deux.

Le corps de chauffe définit par exemple une forme générale creuse, telle qu'une forme cylindrique. En particulier, au moins un élément électrique chauffant définit une forme générale creuse, telle qu'une forme cylindrique.

Selon un mode de réalisation, la base de la pièce intermédiaire est de forme générale annulaire présentant un diamètre intérieur inférieur à un diamètre extérieur. Une première série de pattes dites internes peut s'étendre depuis l'intérieur de la forme annulaire vers l'intérieur du corps de chauffe, c'est-à-dire vers l'intérieur de la forme générale creuse du corps de chauffe, et une deuxième série de pattes dites externes peut s'étendre depuis l'extérieur de la forme annulaire vers l'extérieur du corps de chauffe, c'est-à-dire vers l'extérieur de la forme générale creuse du corps de chauffe.

Les pattes internes s'étendent par exemple vers l'intérieur de l'élément électrique chauffant interne lorsque celui-ci définit une forme générale creuse. Les pattes externes s'étendent par exemple vers l'extérieur de l'élément électrique chauffant externe lorsque celui-ci définit une forme générale creuse.

Selon un autre mode de réalisation, la base présente une forme générale de disque.

Au moins certaines pattes de contact de la pièce intermédiaire peuvent être agencées entre les éléments électriques chauffants concentriques.

Selon un mode de réalisation, toutes les pattes de contact de la pièce intermédiaire peuvent être agencées entre les éléments électriques chauffants concentriques.

Selon une configuration de la pièce intermédiaire avec des pattes de contact inclinées selon des orientations différentes, des premières pattes de contact peuvent être agencées en appui contre l'élément électrique chauffant externe, et des deuxièmes pattes alternées peuvent être agencées en appui contre l'élément électrique chauffant interne.

Selon un autre mode de réalisation, la pièce intermédiaire est réalisée en forme d'agrafe comportant une tête agencée en appui sur l'élément électrique chauffant externe et comportant au moins une première patte et une deuxième patte s'étendant depuis la tête. La première patte est agencée en appui contre l'élément électrique chauffant interne et la deuxième patte est agencée en appui contre la surface interne du boitier.

La tête est par exemple de forme arrondie de façon complémentaire à une forme tubulaire de l'élément chauffant électrique.

La première patte peut être droite.

La deuxième patte peut être droite. Elle est avantageusement bombée ou convexe de convexité orientée vers la surface interne du boitier. La forme bombée permet d'éviter d'abimer la surface interne du boitier.

L'invention concerne aussi une installation de chauffage et/ou ventilation et/ou climatisation d'un flux d'air comportant un dispositif de chauffage électrique tel que défini ci-dessus.

D'autres avantages et caractéristiques de l'invention apparaîtront plus clairement à la lecture de la description suivante donnée à titre d'exemple illustratif et non limitatif, et des dessins annexés parmi lesquels :
La figure 1 montre un dispositif de chauffage électrique selon l'invention.
La figure 2 est une représentation d'un corps de chauffe du dispositif de chauffage électrique de la figure 1 comprenant deux éléments électriques chauffants.
La figure 3 est une représentation d'un corps de chauffe comprenant trois éléments électriques chauffants.
La figure 4 montre un élément de liaison mécanique selon un premier mode de réalisation assemblé sur le corps de chauffe de la figure 2.
La figure 5 est une vue une coupe d'un dispositif de chauffage électrique comportant le corps de chauffe et l'élément de liaison mécanique de la figure 4.
La figure 6 est une première vue de l'élément de liaison mécanique des figures 4 et 5.
La figure 7 est une deuxième vue de l'élément de liaison mécanique des figures 4 et 5.
La figure 8 est une vue en coupe d'un dispositif de chauffage électrique comportant un corps de chauffe et un élément de liaison mécanique selon un deuxième mode de réalisation.
La figure 9 est une vue une coupe d'un dispositif de chauffage électrique comportant le corps de chauffe de la figure 3 et deux éléments de liaison mécanique selon un troisième mode de réalisation.
La figure 10 est une vue en perspective de l'élément de liaison mécanique selon le troisième mode de réalisation.
La figure 11 est une vue en perspective d'un élément de liaison mécanique selon un quatrième mode de réalisation.
La figure 12 est un premier exemple d'agencement de l'élément de liaison mécanique de la figure 11 dans un boitier du dispositif de chauffage électrique comportant un élément électrique chauffant. Cet exemple d'agencement n'est pas conforme à l'invention.
La figure 13 est un deuxième exemple d'agencement de l'élément de liaison mécanique de a figure 11 dans un boitier du dispositif de chauffage électrique comportant deux éléments électriques chauffants.
La figure 14 montre des éléments de liaison mécanique selon un cinquième mode de réalisation assemblés sur le corps de chauffe de la figure 2.
La figure 15 est une vue en perspective d'un élément de liaison mécanique de la figure 14.
La figure 16 est une vue en perspective d'une variante de l'élément de liaison mécanique de la figure 15.
La figure 17 est une vue en perspective d'un élément de liaison mécanique selon un sixième mode de réalisation.
La figure 18 montre l'élément de liaison mécanique de la figure 17 assemblé sur le corps de chauffe de la figure 2.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

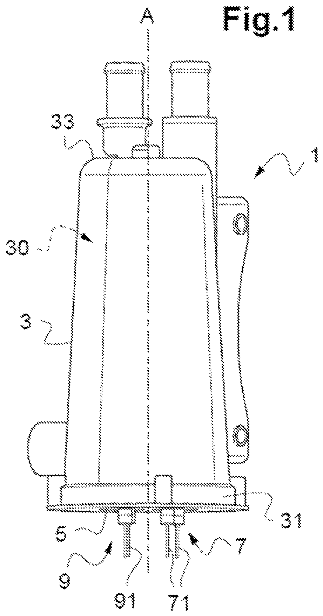

En référence à la figure 1, l'invention concerne un dispositif de chauffage électrique 1, en particulier pour un véhicule automobile tel qu'un véhicule électrique ou hybride. Ce dispositif de chauffage électrique 1, est destiné notamment à coopérer avec une installation de chauffage et/ou ventilation et/ou climatisation d'un flux d'air pour un tel véhicule automobile. Il s'agit d'un dispositif de chauffage électrique 1 permettant de chauffer un fluide, en particulier un liquide tel que de l'eau glycolée.

Le dispositif de chauffage électrique 1 comprend un boitier 3. Le boitier 3 peut présenter une forme générale cylindrique ou conique. En alternative, il peut présenter une forme générale parallélépipédique.

Le dispositif de chauffage électrique 1, comprend une chambre 30 de circulation du liquide délimitée au moins en partie par le boitier 3.

Le boitier 3 s'étend par exemple longitudinalement selon un axe d'extension du dispositif de chauffage électrique 1, appelé axe longitudinal A. Le boitier 3 est délimité par une première extrémité longitudinale 31 et par une deuxième extrémité longitudinale 33. Les extrémités longitudinales 31 et 33 s'étendent, par exemple, tel que représenté, dans des plans parallèles l'un à l'autre, et orthogonaux à l'axe longitudinal A.

Selon le mode de réalisation particulier illustré, le dispositif de chauffage électrique 1, comprend un socle 5, sur lequel est fixé le boitier 3, délimitant ainsi une chambre 30 de circulation du liquide à l'intérieur du boitier 3. Le socle 5 est agencé au niveau de la première extrémité longitudinale 31 du boitier 3. La chambre 30 de circulation du liquide est centrée sur l'axe longitudinal A. La chambre 30 de circulation du liquide est définie avec une forme générale cylindrique ou conique. D'autres alternatives peuvent être envisagées, par exemple avec une forme parallélépipédique.

Le socle 5 peut également réaliser une séparation entre la chambre 30 de circulation du liquide et une cavité (non représentée sur la figure 1) du dispositif de chauffage électrique 1, par exemple du boitier 3, au sein de laquelle peut être monté un circuit électrique par exemple.

Le dispositif de chauffage électrique 1, comporte de plus une paroi interne, délimitant au moins en partie la chambre 30 de circulation, qui porte un ou plusieurs éléments électriques chauffants 7, 9, tels que des résistances chauffantes. Cette paroi interne forme un support de ces éléments électriques chauffants 7, 9. Cette paroi interne peut ou non être définie par le boitier 3.

En particulier, cette paroi interne peut être définie par le socle 5. Le socle 5 porte dans ce cas le ou plusieurs éléments électriques chauffants 7, 9, tels que des résistances chauffantes. La suite de la description concerne ce mode de réalisation particulier de la paroi interne définie par un tel socle 5. Bien entendu, l'invention ne se limite pas à cet exemple particulier, et la suite de la description peut s'appliquer pour une autre paroi interne du dispositif de chauffage électrique 1 non définie par un tel socle.

L'élément ou les éléments électriques chauffants 7 et 9 s'étendent dans la chambre 30 de circulation du liquide. En fonctionnement, le liquide à chauffer peut circuler au sein de cette chambre 30 et, monter en température au contact du ou des éléments électriques chauffants 7, 9, par échange thermique avec ceux-ci. Le liquide chauffé peut ensuite être évacué du dispositif de chauffage électrique 1, de manière à être dirigé vers d'autres composants du véhicule automobile.

L'élément ou les éléments électriques chauffants 7, 9 sont fixés sur le socle 5 formant ainsi une première liaison mécanique entre les éléments électriques chauffants 7, 9 et le socle 5. Pour ce faire, le ou les éléments électriques chauffants 7, 9 sont insérés et fixés, de manière étanche, au niveau d'orifices (non visibles) réalisés dans le socle 5, de sorte que le liquide circulant dans la chambre de circulation ne puisse s'échapper. L'élément ou les éléments électriques chauffants 7, 9 sont par exemple fixés sur le socle 5 par soudure.

L'élément électrique chauffant 7, respectivement 9, est pourvu de terminaux électriques 71, respectivement 91. Les terminaux électriques 71, 91, s'étendent par exemple dans une direction sensiblement parallèle à l'axe longitudinal A.

Les terminaux électriques 71, 91, s'étendent du côté du socle 5 opposé à la chambre 30 de circulation du liquide, pour être raccordés à une alimentation électrique, par exemple via le circuit électrique.

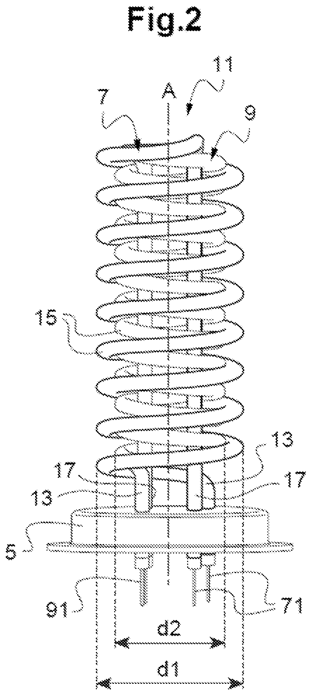

Le socle 5 et l'élément ou les éléments électriques chauffants 7 et 9 forment un ensemble appelé corps de chauffe 11 mieux visible sur la figure 2. Dans l'exemple illustré, l'agencement du socle 5 et de l'élément ou des éléments électriques chauffants 7, 9 définit une forme générale cylindrique du corps de chauffe 11. Ce dernier présente ainsi une première extrémité longitudinale formée par le socle 5 et une deuxième extrémité longitudinale opposée au socle 5.

La figure 2 présente en particulier un exemple de réalisation d'un corps de chauffe 11 comprenant un premier élément électrique chauffant 7 et un deuxième élément électrique chauffant 9. Bien entendu, d'autres configurations peuvent être envisagées un seul élément électrique chauffant ou plus de deux éléments électriques chauffants. Cette figure 2 montre l'agencement relatif des deux éléments électriques chauffants 7, 9.

Selon le mode de réalisation illustré, les deux éléments électriques chauffants 7, 9 s'étendent longitudinalement dans la chambre 30 de circulation du liquide sur une même longueur ou hauteur en référence à l'orientation de la figure 2.

Au moins un élément électrique chauffant 7, 9 peut définir une forme générale creuse, telle qu'une forme cylindrique. Les éléments électriques chauffants 7, 9 sont par exemple de forme générale tubulaire et peuvent être agencés, par exemple au moins en partie enroulés, de façon à définir la forme générale creuse, telle qu'une forme cylindrique. En particulier, au moins un élément électrique chauffant 7, 9 présente au moins en partie une forme hélicoïdale.

Selon le mode de réalisation particulier représenté, les éléments électriques chauffants 7, 9 comportent une première section terminale 13, fixée au socle 5, se poursuivant par une portion intermédiaire telle qu'une portion enroulée 15, de forme hélicoïdale, s'étendant selon l'axe longitudinal A, et se terminant par une deuxième section terminale 17. Les premières sections terminales 13 et deuxièmes sections terminales 17 s'étendent entre la portion enroulée 15 de l'élément électrique chauffant respectif 7, 9 et le socle 5. Les sections terminales 13, 17 sont respectivement équipées à leurs extrémités d'un des terminaux électriques 71, 91.

De plus, dans l'exemple particulier illustré, les deuxièmes sections terminales 17 des éléments électriques chauffants 7, 9 s'étendent de manière rectiligne dans une zone centrale à l'intérieur des portions enroulées 15. La deuxième section terminale 17 permet de joindre l'extrémité distale, par rapport au socle 5, de la portion enroulée 15 au socle 5.

Les deux éléments électriques chauffants 7, 9 peuvent être concentriques, l'un étant disposé autour de l'autre. Dans l'exemple illustré, le premier élément électrique chauffant 7, est défini par un premier diamètre d1 et le deuxième élément électrique chauffant 9 est défini par un deuxième diamètre d2 inférieur au premier diamètre d1, de sorte que le premier élément électrique chauffant 7 est disposé autour du deuxième élément électrique chauffant 9. Selon cette configuration, le premier élément électrique chauffant 7 forme donc un élément externe tandis que le deuxième élément électrique chauffant 9 forme un élément interne.

En particulier, dans le cas d'éléments électriques chauffants 7, 9, au moins en partie de forme hélicoïdale, les portions enroulées 15 des éléments électriques chauffants 7, 9 sont enroulées autour d'un même axe d'enroulement, ici confondu avec l'axe longitudinal A.

Le corps de chauffe 11 est avantageusement agencé dans le boitier 3, de sorte que, dans un plan orthogonal à l'axe longitudinal A, les points de la surface extérieure de la portion enroulée 15 d'au moins l'un des éléments électrique chauffant 7, 9 soient équidistants, ou sensiblement équidistants, d'une surface interne du boitier 3.

D'autres configurations sont envisageables. Par exemple, deux ou plus éléments électriques chauffants peuvent être disposés en étant alignés axialement. Un ou plusieurs éléments électriques chauffants peuvent ou non être disposés autour ou à l'intérieur de ces éléments électriques chauffants alignés.

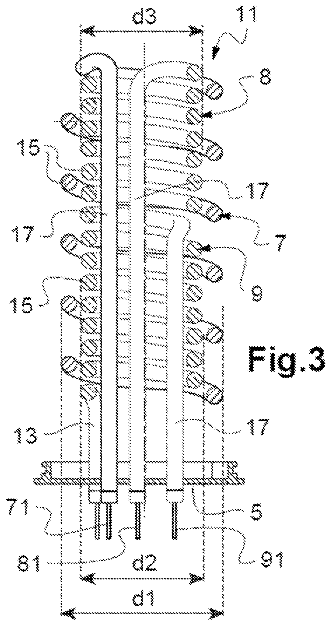

Un exemple de variante de réalisation est illustré sur la figure 3. Dans cet exemple, le corps de chauffe 11 comprend trois éléments électriques chauffants 7, 8, 9, chacun munis à ses extrémités de terminaux électriques respectifs 71, 81, 91. Un premier élément électrique chauffant 7, défini par un premier diamètre d1, un deuxième élément électrique chauffant 9 défini par un deuxième diamètre d2 et un troisième élément électrique chauffant 8, défini par un troisième diamètre d3. Le premier diamètre d1 est supérieur au deuxième diamètre d2 et au troisième diamètre d3. Les deuxième et troisième diamètres d2 et d3 peuvent être égaux.

Les différents éléments électriques chauffants 7, 8, 9 sont agencés de sorte que le premier élément électrique chauffant 7 est disposé autour du deuxième et du troisième élément électrique chauffant 8, 9. En particulier, et tel que représenté sur la figure 3, le troisième élément électrique chauffant 8 est disposé dans le prolongement axial, en bout du deuxième élément électrique chauffant 9, et ces deux éléments électriques chauffants 8 et 9, présentent un axe d'enroulement commun, confondu avec l'axe d'enroulement du premier élément électrique chauffant 7, également confondu avec l'axe longitudinal A.

Selon une autre variante non représentée, le deuxième élément électrique chauffant et le troisième élément électrique chauffant 9, 8 peuvent être disposés autour du premier élément électrique chauffant qui serait dans ce cas de diamètre inférieur.

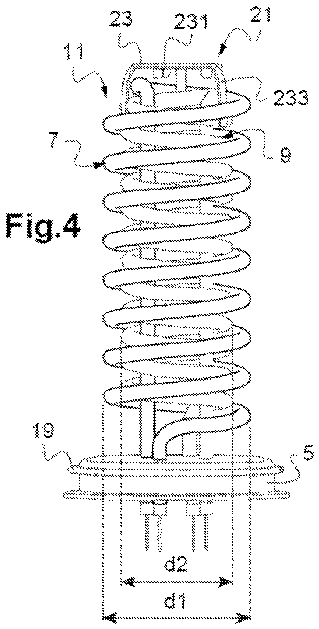

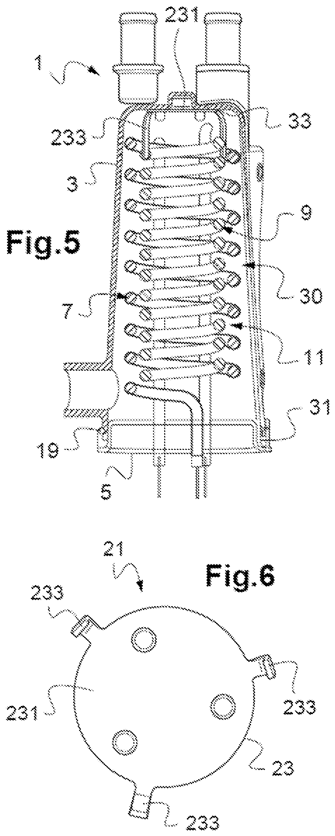

En référence aux figures 4 et 5, un joint d'étanchéité 19, par exemple de forme annulaire, est avantageusement disposé à la base du corps de chauffe 11, dans une gorge de réception située entre le socle 5 et le boitier 3 à l'état assemblé du dispositif 1 de chauffage électrique, afin d'assurer l'étanchéité de la chambre 30 de circulation du liquide.

Le dispositif de chauffage électrique 1 comporte de plus au moins un élément de liaison mécanique 21 agencé dans la chambre 30 de circulation du liquide en reliant mécaniquement l'élément ou les éléments électriques chauffants 7, 9 et la surface interne du boitier 3 s'étendant en regard du corps de chauffe 11, de façon à former une deuxième liaison mécanique distincte de la première liaison mécanique. On rajoute donc une liaison mécanique entre la surface interne de la chambre 30 et l'élément ou les éléments électriques chauffants 7, 9.

Différents modes de réalisation de l'élément de liaison mécanique 21 sont représentés sur les figures 4 à 18, Le dispositif de chauffage 1 peut comprendre un seul élément de liaison mécanique 21 ou au contraire plusieurs éléments de liaison mécanique 21.

De façon générale, la deuxième liaison mécanique est de préférence assurée par au moins trois points de contact avec l'élément ou au moins l'un des éléments électriques chauffants 7, 8, 9 lorsque plusieurs sont prévus. En particulier, la deuxième liaison mécanique est assurée par au moins trois points de contact avec chaque élément électrique chauffant 7, 8, 9.

L'élément de liaison mécanique 21 est en particulier prévu pour relier mécaniquement la surface interne du boitier 3 à au moins un enroulement d'un élément électrique chauffant 7, 8, 9 lorsque les éléments électriques chauffants 7, 8, 9, sont au moins en partie de forme hélicoïdale comme décrit précédemment.

L'élément ou au moins l'un des éléments de liaison mécanique 21 peut être agencé dans la chambre 30 de circulation du liquide en reliant mécaniquement la surface interne du boitier 3 à une extrémité longitudinale d'un ou plusieurs éléments électriques chauffants 7, 8, 9. Il peut notamment être agencé transversalement en regard d'une extrémité longitudinale d'au moins un élément électrique chauffant 7, 8, 9.

En particulier, l'élément ou au moins l'un des éléments de liaison mécanique 21 peut être prévu à l'opposé du socle 5.

Lorsque le corps de chauffe 11 comporte au moins deux éléments électriques chauffants distincts 7, 8, 9, l'élément ou au moins l'un des éléments de liaison mécanique 21 peut être agencé entre les deux éléments distincts 7, 8, 9, de façon à maintenir une distance afin qu'ils n'entrent pas en contact l'un avec l'autre et qu'il n'y ait pas de chevauchement. De préférence, les éléments électriques chauffants distincts 7, 8, 9, et l'élément ou au moins l'un des éléments de liaison mécanique 21 sont agencés pour limiter voire éviter tout contact direct entre les éléments électriques chauffants 7, 8, 9, que ce soit au niveau de leurs sections terminales propres 13 et 17 ou de leur portion enroulée 15.

Lorsque le corps de chauffe 11 comporte au moins deux éléments électriques chauffants concentriques 7, et 8 ou 9, l'un étant disposé autour de l'autre, l'élément de liaison mécanique 21 peut être agencé entre ces deux éléments électriques chauffants dans un plan orthogonal à l'axe longitudinal A.

Lorsque le corps de chauffe 11 comporte au moins deux éléments électriques chauffants 8, 9 disposés dans le prolongement axial l'un de l'autre, l'élément de liaison mécanique 21 peut être agencé axialement entre ces deux éléments électriques chauffants 8, 9.

Selon les modes de réalisation décrits en référence aux figures 4 à 16, l'élément de liaison mécanique 21 est réalisé par une pièce intermédiaire 23, ou 25, ou 26, ou 27, ou 28, 29, agencée entre la surface interne du boitier 3 et le corps de chauffe 11. L'élément ou au moins l'un des éléments de liaison mécanique 21 peut être agencé entre le corps de chauffe 11 et une surface interne d'extrémité ou latérale du boitier 3.

La deuxième liaison mécanique est donc une liaison indirecte entre le boitier 3 et l'élément ou les éléments électriques chauffants 7, 8, 9.

Une telle pièce intermédiaire 23, 25, 26, 27, ou 28, 29, est réalisée dans un matériau conducteur thermique, de façon à former un pont thermique entre les éléments électriques chauffants 7, 9 et le boitier 3. Ceci permet de faciliter la mesure de la température des éléments électriques chauffants, même en cas d'absence de liquide dans la chambre 30 de circulation.

Le matériau est choisi de façon à tenir un nombre important de cycles. Il s'agit en particulier d'un matériau métallique, configuré pour résister aux températures de fonctionnement des éléments électriques chauffants, avec lesquels l'élément de liaison mécanique est en contact mécanique.

Une telle pièce intermédiaire 23, 25, 26, 27, ou 28, 29, est au moins en partie élastique et flexible, ce qui permet de compenser les intervalles de tolérances du dispositif de chauffage électrique. Plus généralement, la pièce intermédiaire 23, 25, 26, 27, ou 28, 29, est conformée selon un équilibre entre rigidité et flexibilité pour garantir un contact mécanique avec les éléments électriques chauffants 7, 8, 9 dans la chambre 30 de circulation sans les écraser. La pièce intermédiaire 23, 25, 26, 27, ou 28, 29, peut être configurée pour résister à un effort de maintien qui peut varier par exemple de façon non limitative entre 10N et 50N.

Selon l'un ou l'autre des modes de réalisation décrits par la suite, la pièce intermédiaire 23, 25, 26, 27, ou 28, 29, est conformée de façon complémentaire aux éléments avec lesquelles elle est destinée à coopérer.

### Premier mode de réalisation

Les figures 4 à 7 illustrent un premier mode de réalisation selon lequel le dispositif de chauffage électrique 1 comporte deux éléments électriques chauffants 7, 9 tels que décrits en référence à la figure 2, ainsi qu'une pièce intermédiaire 23 configurée pour assurer plusieurs points de contact avec au moins l'un ou chaque élément électrique chauffant 7, 9.

Cette pièce intermédiaire 23 comporte une base 231 agencée transversalement en regard d'une extrémité longitudinale du corps de chauffe 11. Cette base 231 est avantageusement centrée sur l'axe longitudinal A.

La pièce intermédiaire 23 comporte de plus un nombre prédéfini de pattes de contact 233 s'étendant à partir de la base 231. De préférence au moins trois pattes de contact 233 ou un multiple de trois sont prévues.

La base 231 de la pièce intermédiaire est par exemple agencée en appui contre la surface interne du boitier 3 au niveau de la deuxième extrémité 33 longitudinale du boitier 3, à l'opposé du socle 5. L'extrémité 33 longitudinale du boitier 3 est une surface d'extrémité de section circulaire selon l'exemple illustré du boitier 3 cylindrique.

La pièce intermédiaire est maintenue plaquée contre la surface interne du boitier 3 par la contrainte exercée par les éléments électriques chauffants 7, 9 lorsqu'ils sont reçus dans le boitier 3.

La base 231 peut être de forme complémentaire à la forme générale du corps de chauffe 11, en particulier de l'extrémité longitudinale du corps de chauffe 11 en regard de laquelle elle est agencée. La base 231 peut également être de forme complémentaire à la forme de la surface interne du boitier 3 contre laquelle elle est plaquée.

Dans l'exemple illustré, la base 231 présente une forme générale de disque. Le disque présente par exemple un diamètre qui peut ou non être proche ou correspondre au diamètre de l'un des éléments électriques chauffants.

La disposition des pattes de contact 233 est liée à la forme du corps de chauffe 11, et en particulier à l'extrémité longitudinale du corps de chauffe 11 avec laquelle la pièce intermédiaire coopère. Selon l'exemple illustré du corps de chauffe 11 de forme générale cylindrique, les pattes de contact 233 sont disposées de façon circulaire. Elles sont avantageusement régulièrement réparties sur 360°.

Les pattes de contact 233 peuvent être de toute forme appropriée pour assurer le contact avec un ou plusieurs éléments électriques chauffants 7, 9. Dans l'exemple illustré, les pattes de contact 233 sont droites. Elles s'étendent longitudinalement depuis la base 231 selon un axe parallèle ou sensiblement parallèle à l'axe longitudinal A. Selon ce premier mode de réalisation, toutes les pattes 233 s'étendent suivant une même orientation par rapport à l'axe longitudinal A, elles s'étendent ici toutes de façon parallèle à l'axe longitudinal A. Les pattes 233 s'étendent toutes depuis une même circonférence de la base 231.

Selon le premier mode de réalisation, toutes les pattes de contact 233 peuvent venir en contact avec au moins un élément électrique chauffant 7, 9, soit à l'intérieur soit à l'extérieur de cet élément électrique chauffant 7, 9.

De plus, les pattes de contact 233 présentent une longueur calculée de façon à assurer au moins trois points de contact avec au moins un élément électrique chauffant 7, 9. En particulier, comme représenté sur les figures 4 et 5, au moins l'une des pattes de contact 233 est conformée de façon à venir en contact avec chacun des deux éléments électriques chauffants 7, 9.

Les pattes de contact 233 s'étendent par exemple depuis la bordure périphérique de la base 231. Elles s'étendent en direction du corps de chauffe 11, plus précisément en direction des éléments électriques chauffants 7, 9. En particulier, selon ce premier mode de réalisation, les pattes de contact 233 sont respectivement agencées entre les deux éléments électriques chauffants 7 et 9. On assure ainsi le maintien d'une distance prédéterminée entre les deux éléments électriques chauffants 7, 9.

Les pattes de contact 233 peuvent éventuellement présenter une flexibilité permettant une déformation des pattes de contact 233 pour garantir leur positionnement entre les deux éléments électriques chauffants 7, 9, concentriques.

Par exemple, les pattes de contact 233 pourraient être au moins en partie courbes ou inclinées par rapport à l'axe longitudinal A. Une telle forme favoriserait une déformation des pattes de contact lorsque la pièce intermédiaire 23 et le corps de chauffe sont insérés dans le boitier 3, en garantissant le contact mécanique entre les deux.

La description ci-dessus se réfère à un corps de chauffe 11 comportant deux éléments électriques chauffants 7, 9. De façon alternative, le corps de chauffe 11 peut comprendre trois éléments électriques chauffants 7, 8, 9 tels que décrits en référence à la figure 3, et dans ce cas, la pièce intermédiaire 23 est agencée de façon à assurer plusieurs points de contact avec les premier et troisième éléments électriques chauffants 7 et 8. En alternative ou en complément, une telle pièce intermédiaire 23 pourrait également être prévue entre les deux éléments électriques 8, 9, dans le prolongement axial l'un de l'autre.

### Deuxième mode de réalisation

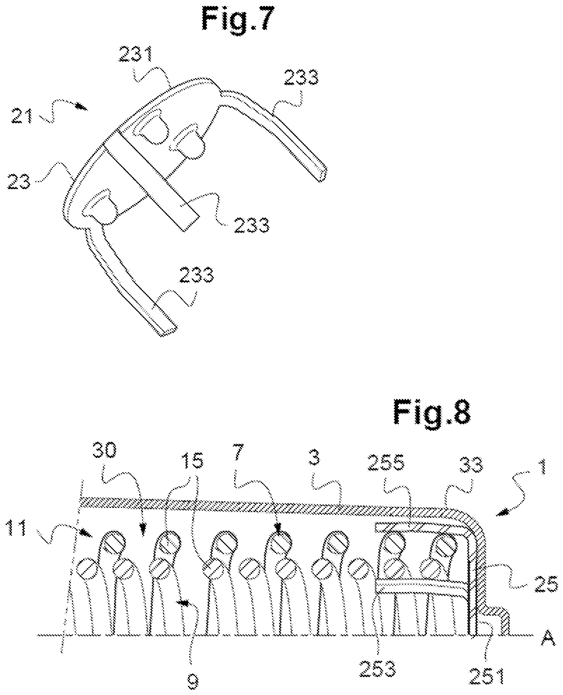

La figure 8 illustre un deuxième mode de réalisation de la pièce intermédiaire 25 formant l'élément de liaison mécanique 21. Seules les différences par rapport au premier mode de réalisation sont détaillées ci-après.

La pièce intermédiaire 25 comporte une base 251 à partir de laquelle s'étendent plusieurs pattes 253, 255 dont au moins certaines 255 sont agencées en contact avec la surface interne du boitier 3.

La base 251 peut ou non être similaire à la base 231 décrite en référence au premier mode de réalisation des figures 4 à 7. La base 251 peut présenter la forme de disque ou en variante une forme annulaire avec un alésage central.

De façon similaire au premier mode de réalisation, la base 251 peut être plaquée contre la surface interne d'une des extrémités longitudinales du boitier 3, ici de la deuxième extrémité longitudinale 33.

La pièce intermédiaire 25 peut comprendre au moins une première patte dite patte interne 253 et au moins une deuxième patte dite patte externe 255. De préférence, la pièce intermédiaire 25 comporte au moins trois pattes internes 253 et au moins trois pattes externes 255. Les pattes internes 253 s'étendent depuis la base 251 vers l'intérieur du corps de chauffe 11, c'est-à-dire vers l'intérieur de la forme générale creuse du corps de chauffe 11, en particulier dans l'exemple illustré vers l'intérieur de la forme générale creuse du deuxième élément électrique chauffant 9. Les pattes externes 255 s'étendent depuis la base 251 vers l'extérieur du corps de chauffe 11, en particulier vers l'extérieur du premier élément électrique chauffant 7 disposé autour du deuxième élément électrique 9.

Les pattes externes 255 peuvent être conformées de façon à assurer un contact mécanique avec la surface interne du boitier 3, il s'agit notamment d'une surface latérale du boitier 3. Les pattes externes 255 peuvent être conformées de façon à assurer également un contact mécanique avec un élément électrique chauffant, dans cet exemple le premier élément électrique chauffant 7. Dans cet exemple, toutes les pattes de contact, ici les pattes externes 255, qui sont agencées entre la surface interne du boitier 3 et le premier élément électrique chauffant 7, sont agencées en contact avec les deux. De façon alternative, on peut prévoir que les pattes externes soient alternativement en contact avec la surface interne du boitier et avec l'élément électrique chauffant 7.

Comme précédemment, les pattes de contact 253, 255 peuvent être droites. Les pattes externes 255 peuvent s'étendre depuis la bordure périphérique de la base 251. Les pattes internes 253 quant à elles peuvent s'étendre depuis une autre région, par exemple plus centrale, de la base 251. En particulier selon l'exemple illustré, les pattes internes 253 et 255 s'étendent depuis des régions différentes, plus précisément des circonférences différentes dans cet exemple. Comme dit précédemment, les pattes internes 253 s'étendent depuis la base 251 vers l'intérieur de la forme générale creuse du corps de chauffe 11, c'est-à-dire dans l'exemple illustré vers l'intérieur de la forme générale creuse du deuxième élément électrique chauffant 9. Elles viennent en appui contre le deuxième élément électrique chauffant 9, par l'intérieur.

De façon similaire au premier mode de réalisation, toutes les pattes externes 255 s'étendent suivant une même orientation par rapport à l'axe longitudinal A, elles s'étendent ici toutes de façon parallèle à l'axe longitudinal A. Les pattes externes 255 s'étendent toutes depuis une même circonférence de la base 231.

De même, toutes les pattes internes 253 s'étendent suivant une même orientation par rapport à l'axe longitudinal A, elles s'étendent ici toutes de façon parallèle à l'axe longitudinal A. Les pattes internes 253 s'étendent toutes depuis une même circonférence de la base 231.

En outre, selon l'exemple illustré, toutes les pattes à la fois internes 253, et externes 255 sont toutes orientées de la même façon.

Dans l'exemple illustré, une seule pièce intermédiaire 25 est prévue à une extrémité longitudinale du corps de chauffe 11. Selon la variante de réalisation du corps de chauffe 11 précédemment décrite en référence à la figure 3 avec au moins deux éléments électriques chauffants, par exemple 8 et 9, dans le prolongement axial l'un de l'autre, on peut envisager d'agencer une autre pièce intermédiaire 25 telle que décrite en référence à la figure 8, axialement entre ces deux éléments électriques chauffants 8, 9. Dans ce cas, cette autre pièce intermédiaire 25 serait maintenue uniquement contre la surface latérale interne du boitier 3. On peut également envisager de disposer une telle pièce intermédiaire 25 uniquement entre deux éléments électriques chauffants dans le prolongement axial l'un de l'autre, et non en extrémité du corps de chauffe 11.

### Troisième mode de réalisation

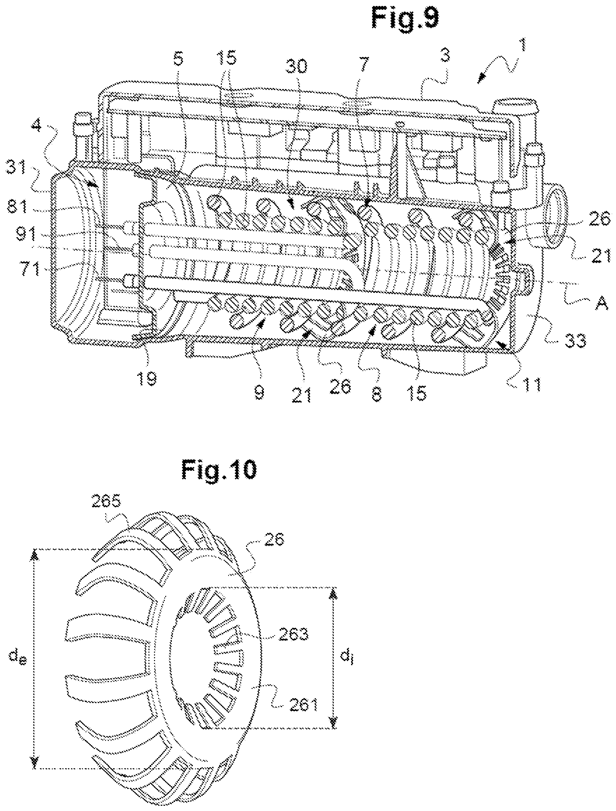

Les figures 9 et 10 illustrent un troisième mode de réalisation d'une pièce intermédiaire 26 formant l'élément de liaison mécanique 21. Seules les différences par rapport au deuxième mode de réalisation sont détaillées ci-après.

Selon le troisième mode de réalisation, la pièce intermédiaire 26 comporte des pattes de contact 263, 265 s'étendant depuis une base 261, dont au moins certaines 265, sont courbes. Les pattes de contact 265 courbes s'étendent par exemple radialement depuis la base 261 en direction de la surface interne du boitier 3 à l'état assemblé du dispositif de chauffage électrique 1. Puis, à titre d'exemple, ces pattes de contact 265 peuvent réaliser un demi-tour voire former un coude, leur donnant la forme courbe.

À l'assemblage de la pièce intermédiaire 26 dans la chambre 30 de circulation du liquide, les pattes de contact 265 courbes peuvent être déformées pour être correctement positionnées et assurer le contact mécanique recherché. Selon un exemple particulier non limitatif, le corps de chauffe 11 peut être assemblé avec au moins une telle pièce intermédiaire 26. Lorsque l'ensemble est inséré dans la chambre 30 de circulation du liquide, les pattes de contact 265 de la pièce intermédiaire 26 peuvent être déformées du fait de la contrainte exercée par la surface interne du boitier 3 et les éléments électriques chauffants 7, 8, 9.

La base 261 est par exemple de forme générale annulaire définie par un cercle intérieur de diamètre intérieur dᵢ et un cercle extérieur de diamètre extérieur dₑ. Le diamètre intérieur dᵢ est inférieur au diamètre extérieur dₑ.

La figure 9 montre une configuration du corps de chauffe avec trois éléments électriques chauffants 7, 8, 9, tels que décrits précédemment en référence à la figure 3. Une première pièce intermédiaire 26 est agencée avec sa base 261 en regard d'une extrémité longitudinale du corps de chauffe 11, en particulier en contact avec ladite extrémité, et une deuxième pièce intermédiaire 26 est agencée axialement entre les deuxième et troisième éléments électriques chauffants 8 et 9. Cette deuxième pièce intermédiaire 26 est agencée avec sa base 261 en regard de et en contact avec un côté d'une extrémité longitudinale de la portion enroulée 15 du deuxième élément électrique chauffant 9 et de l'autre côté en regard de et en contact avec une extrémité longitudinale de la portion enroulée 15 du troisième élément électrique chauffant 8, plus précisément en regard et en contact d'un côté et de l'autre d'extrémités des portions enroulées 15 de ces éléments électriques chauffants 8, 9. En particulier, la deuxième pièce intermédiaire 26 est en contact avec l'extrémité du deuxième ou du troisième élément électrique chauffant 8 et 9.

Dans l'exemple illustré sur les figures 9 et 10, la pièce intermédiaire 26 comporte une première série de pattes dites pattes internes 263 et une deuxième série de pattes dites pattes externes 265.

Les pattes internes 263 s'étendent depuis l'intérieur de la base 261 annulaire, c'est-à-dire depuis le cercle intérieur, vers l'intérieur de la forme générale creuse du corps de chauffe 11. Dans l'exemple illustré, ces pattes internes 263 sont droites ou sensiblement droites.

Selon la configuration en figure 9 du corps de chauffe 11 avec trois éléments électriques chauffants 7, 8, 9, les pattes internes 263 de la première pièce intermédiaire 26, agencée en extrémité longitudinale du corps de chauffe 11, s'étendent vers l'intérieur de la forme générale creuse du troisième élément électrique chauffant 8. Les pattes internes 263 de la deuxième pièce intermédiaire 26 agencée entre les deuxième et troisième éléments électriques chauffants 9, 8, s'étendent quant à elles vers l'intérieur de la forme générale creuse du deuxième élément électrique chauffant 9.

Les pattes externes 265 de la pièce intermédiaire 26 s'étendent depuis l'extérieur de la base 261 annulaire, c'est-à-dire depuis le cercle extérieur, vers l'extérieur du corps de chauffe 11. Dans l'exemple illustré, les pattes externes 265 s'étendent vers l'extérieur du premier élément électrique chauffant 7 disposé autour des deux autres éléments électriques chauffants 8, 9. Dans l'exemple illustré, ces pattes externes 265 sont les pattes de contact courbes telles que définies précédemment.

Par ailleurs, la figure 9 montre la cavité 4 du dispositif de chauffage électrique 1, séparée de la chambre 30 de circulation du liquide par le socle 5, dans laquelle débouchent les terminaux électriques 71, 81, 91 respectifs des éléments électriques chauffants 7, 8, 9, et dans laquelle peut par exemple être monté un circuit électrique.

La description ci-dessus se réfère à un corps de chauffe 11 comportant trois éléments électriques chauffants 7, 8, 9, et deux pièces intermédiaires 26. En variante, une seule de ces pièces intermédiaires 26 peut être prévue en extrémité ou entre les deux éléments électriques chauffants 8, 9, dans, les éléments électriques chauffants 8, 9 étant dans le prolongement axial l'un de l'autre. Le corps de chauffe 11 peut aussi ne comprendre que deux éléments électriques chauffants 7, 9 concentriques tels que décrits en référence à la figure 2, et dans ce cas, une seule pièce intermédiaire 26 peut être agencée avec sa base 261 en regard d'une extrémité longitudinale du corps de chauffe 11, de façon à assurer plusieurs points de contact avec ces deux éléments électriques chauffants 7 et 9.

### Quatrième mode de réalisation

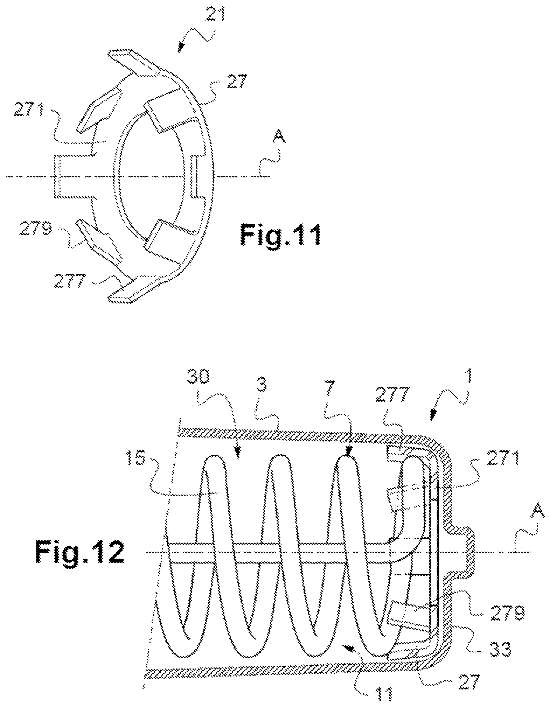

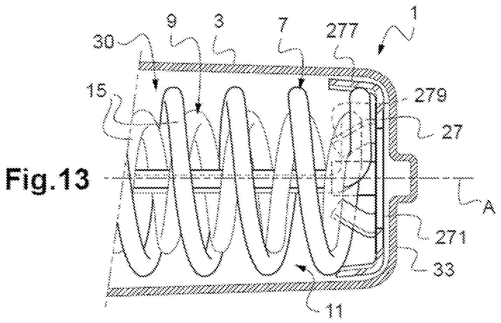

La figure 11 illustre un quatrième mode de réalisation d'une pièce intermédiaire 27 formant un élément de liaison mécanique 21. Comme précédemment, seules les différences par rapport au premier mode de réalisation sont détaillées ci-après. Les figures 12 et 13 montrent deux exemples d'agencement d'une telle pièce intermédiaire 27 dans le boitier 3 du dispositif de chauffage électrique 1.

Le quatrième mode de réalisation diffère du premier mode de réalisation en ce que la pièce intermédiaire 27 comporte des pattes de contact 277, 279 s'étendant à partir d'une base 271 qui ne sont pas toutes orientées selon une même direction. Dans l'exemple illustré, les pattes 277, 279 d'orientations différentes s'étendent depuis une même région, ici une même circonférence, de la base annulaire 271.

Dans l'exemple illustré, la base 271 présente une forme générale annulaire. En variante, elle pourrait présenter une forme de disque de façon similaire au premier mode de réalisation. Cette base 271 est centrée sur un axe confondu avec l'axe longitudinal A lorsque la pièce intermédiaire 27 est agencée dans le boitier 3.

Au moins certaines pattes de contact 277, 279, peuvent être inclinées par rapport à l'axe longitudinal A, par exemple en formant un angle de l'ordre de 30° à 45° avant contact. Dans l'exemple illustré, les pattes de contact 277, 279 sont inclinées par rapport à l'axe longitudinal A.

Les pattes 277, 279 peuvent être alternativement inclinées selon des directions différentes.

On peut prévoir par exemple, comme illustré, une alternance de premières pattes de contact 277 et de deuxièmes pattes de contact 279.

Les premières pattes de contact 277 peuvent être orientées vers l'extérieur de la pièce intermédiaire 27, c'est-à-dire en s'éloignant du centre de la pièce intermédiaire 27. Toutes les premières pattes de contact 277 peuvent présenter une même inclinaison par rapport à l'axe longitudinal A.

À l'inverse, les deuxièmes pattes de contact 279 peuvent être orientées vers l'intérieur de la pièce intermédiaire 27, c'est-à-dire vers le centre de la pièce intermédiaire 27 ou vers l'axe longitudinal A. Toutes les deuxièmes pattes de contact 279 peuvent présenter une même inclinaison par rapport à l'axe longitudinal A.

Par exemple, comme schématisé sur la figure 12, à l'assemblage du corps de chauffe 11 dans le boitier 3, la pièce intermédiaire 27 peut être maintenue au sein du boitier 3 par l'élément électrique chauffant 7 (ou au moins l'un des éléments électriques chauffants lorsque le corps de chauffe en comporte au moins deux) venant en appui contre l'ensemble des pattes de contact 277, 279. Le contact mécanique est fait notamment avec l'extrémité distale (par rapport au socle) de la portion enroulée 15 de l'élément électrique chauffant 7. Les pattes de contact 277 et 279 sont en appui contre l'élément électrique chauffant 7, alternativement à l'intérieur et à l'extérieur de celui-ci.

Un tel agencement permet de limiter le débattement longitudinal du corps de chauffe 11 à l'intérieur du boitier 3.

Selon un autre exemple schématisé sur la figure 13, le corps de chauffe 11 et la pièce intermédiaire 27 sont agencés au sein du boitier 3, de sorte que les pattes de contact 277 et 279 sont alternativement en appui contre le premier élément électrique chauffant 7 et le deuxième élément électrique chauffant 9.

En particulier, les premières pattes 277 peuvent venir en contact avec le premier élément électrique chauffant 7 disposé autour du deuxième élément électrique chauffant 9. Les deuxièmes pattes de contact 279 quant à elles peuvent venir en contact avec le deuxième élément électrique chauffant 9. À titre d'exemple non limitatif, les premières pattes 277 peuvent être agencées à l'extérieur du premier élément électrique chauffant 7. Les deuxièmes pattes 279 peuvent être agencées à l'intérieur du deuxième élément chauffant 9.

À l'assemblage du corps de chauffe 11 et de la pièce intermédiaire 27 au sein du boitier 3, les éléments électriques chauffants 7, 9, peuvent venir déformer les pattes de contact 277, 279, garantissant ainsi le contact mécanique.

### Cinquième mode de réalisation

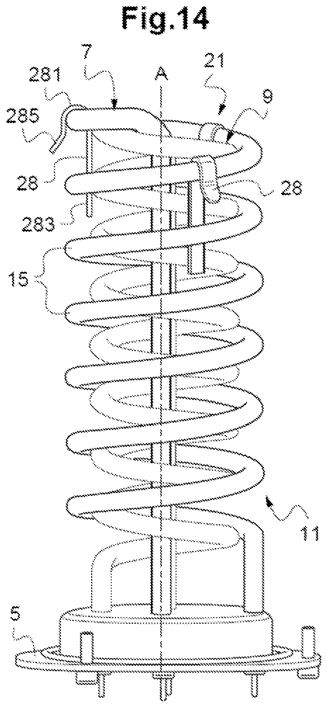

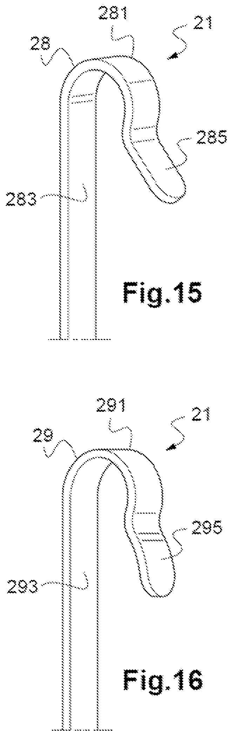

Les figures 14 et 15 illustrent un cinquième mode de réalisation selon lequel plusieurs pièces intermédiaires 28 en forme d'agrafe ou d'épingle sont agencées de manière à réaliser plusieurs éléments de liaison mécanique 21. Un tel mode de réalisation s'applique pour une configuration du corps de chauffe 11 avec au moins deux éléments électriques chauffants concentriques 7, 9.

De préférence, au moins trois pièces intermédiaires 28 en forme d'agrafe sont prévues. Elles sont avantageusement régulièrement réparties sur 360°.

Les pièces intermédiaires 28 comportent une tête 281 et au moins une première languette ou patte 283 et une deuxième languette ou patte 285 s'étendant depuis la tête 281. Les deux languettes ou pattes 283 et 285 sont dans cet exemple de longueurs différentes. La tête 281 est avantageusement une partie arrondie de l'agrafe. La première patte 283, la plus longue dans cet exemple, peut être de forme droite ou sensiblement droite. La deuxième patte 285, la plus courte dans cet exemple, peut également être de forme droite ou sensiblement droite.

À l'assemblage sur le corps de chauffe 11, la tête 281 est agencée en appui sur un élément électrique chauffant, plus précisément l'élément électrique chauffant externe. Il s'agit du premier élément électrique chauffant 7 dans l'exemple illustré. On assure ainsi le maintien de l'agrafe. La forme arrondie permet à la tête 281 d'être enroulée en partie autour de l'élément électrique chauffant 7 externe de forme tubulaire.

Les têtes 281 des pièces intermédiaires 28 sont agencées sur l'extrémité distale, par rapport au socle 5, de la portion enroulée 15 du premier élément électrique chauffant 7.

La première patte 283 s'étend entre les deux éléments électriques chauffants 7, 9 et la deuxième patte 285 s'étend vers l'extérieur du corps de chauffe 11, et donc du périmètre des éléments électriques chauffants concentriques 7, 9. Lorsque l'ensemble est monté au sein du boitier 3, la deuxième patte 285 vient en contact avec la surface interne du boitier 3, de sorte que la première patte 283 est poussée et maintenue en appui contre l'élément électrique chauffant interne. Il s'agit du deuxième élément électrique chauffant 9 dans l'exemple illustré. La première patte 283 est donc coincée entre les éléments électriques chauffants concentriques 7, 9.

La longueur des pattes de contact 283, 285 est calculée de façon à assurer le contact de la deuxième patte 285 avec la surface interne du boitier 3 et le contact de l'agrafe avec un nombre prédéfini d'enroulements, par exemple au moins deux enroulements, de l'élément électrique chauffant interne 9.

La figure 16 montre une variante de la pièce intermédiaire 29 qui diffère du cinquième mode de réalisation de la figure 15 en ce que la deuxième patte 295 qui s'étend à partir de la tête 291 est moins saillante. Elle peut par exemple être aplanie. Avantageusement, la deuxième patte 295 est bombée ou convexe de convexité orientée vers la surface interne du boitier 3. La forme bombée permet d'éviter d'abimer la surface interne du boitier 3 lors du contact mécanique avec l'agrafe.

La première patte 293 s'étendant depuis la tête 291 peut être similaire à la première patte 283 du cinquième mode de réalisation de la figure 15. Le reste de la description du cinquième mode de réalisation s'applique à cette variante.

### Sixième mode de réalisation

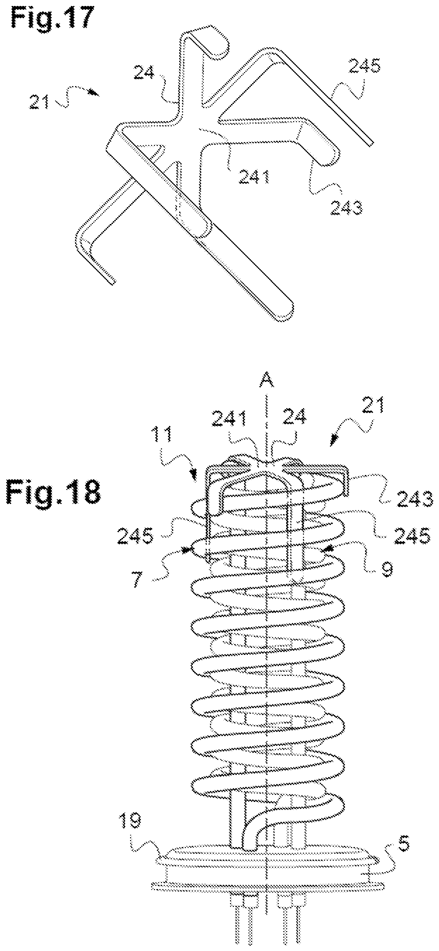

Les figures 17 et 18 illustrent un sixième mode de réalisation d'une pièce intermédiaire 24 formant un élément de liaison mécanique 21.

Le sixième mode de réalisation diffère du deuxième mode de réalisation en ce que la pièce intermédiaire 24 comporte deux séries de pattes 243 et 245 s'étendant depuis une région centrale d'une base 241, par exemple en forme de disque, d'abord radialement avant d'être pliées de façon à s'étendre vers le ou les éléments électriques chauffants 7, 9.

Les premières pattes 243 viennent en contact avec le premier élément électrique chauffant 7 en étant à l'extérieur de celui-ci. Les deuxièmes pattes 245 viennent en contact avec le deuxième élément électrique chauffant 9 en étant agencées par exemple entre les deux éléments électriques chauffants concentriques 7, 9.

Selon l'exemple illustré, les pattes 243, 245 ne sont pas toutes pliées à la même longueur. Elles sont alternativement pliées à deux longueurs différentes. Il en résulte des premières pattes 243 avec une extension radiale plus longue et des deuxièmes pattes 245 avec une extension radiale plus courte.

Selon ce sixième mode de réalisation, les pattes 243, 245 peuvent toutes être pliées pour s'étendre de façon parallèle entre elles. En outre, dans cet exemple, les pattes 243, 245 s'étendent en direction des éléments électriques chauffants 7, 9 selon une direction parallèle ou sensiblement parallèle à l'axe longitudinal A. La portion des pattes 243, 245 s'étendant en direction des éléments électriques chauffants 7, 9 de façon à venir assurer le contact, est appelée extension longitudinale.

Les pattes 243, 245 présentent par exemple des extensions longitudinales de longueurs différentes. Les extensions longitudinales des premières pattes 243 sont ici plus courtes que les extensions longitudinales des deuxièmes pattes 245.

Ainsi, la deuxième liaison mécanique assurée par l'élément ou les éléments de liaison mécanique 21 selon l'un ou l'autre des modes de réalisation précédemment décrits vient en complément de la fixation du ou des éléments électriques chauffants 7, 8, 9, sur le socle 5. Le ou les éléments de liaison mécanique 21 permettent de limiter le mouvement de l'élément ou des éléments électriques chauffants 7, 8, 9, du corps de chauffe 11 au sein du boitier 3.

L'élément de liaison mécanique 21 permet de maintenir une distance entre l'élément ou les éléments électriques chauffants 7, 8, 9, du corps de chauffe 11 avec la surface interne du boitier 3 par exemple au niveau d'une extrémité longitudinale 33 du boitier 3 et/ou d'une surface latérale du boitier 3.

De plus, lorsque le corps de chauffe 11 comporte plusieurs éléments électriques chauffants 7, 8, 9, l'élément de liaison mécanique 21 peut permettre de maintenir les éléments électriques chauffants 7, 8, 9, à la même distance l'une de l'autre, sans contact ou très peu de contact entre eux.

Ceci permet d'éviter aux éléments du corps de chauffe 11 de s'entrechoquer à l'intérieur du boitier 3 en utilisation dans un véhicule automobile, et de limiter ainsi la génération de bruit.

## Revendications

1. Dispositif de chauffage électrique (1) d'un liquide, notamment pour véhicule automobile, comportant un corps de chauffe (11), et un boitier (3) délimitant, au moins en partie, une chambre (30) de circulation du liquide, le corps de chauffe (11) comprenant au moins deux éléments électriques chauffants (7, 8, 9) concentriques, les deux éléments électriques chauffants (7, 8, 9) s'étendant dans la chambre (30) de circulation du liquide et étant fixés sur une paroi interne dudit dispositif délimitant, au moins en partie, la chambre (30) de circulation du liquide, de façon à former une première liaison mécanique, le dispositif de chauffage électrique (1) comportant au moins un élément de liaison mécanique (21) agencé dans la chambre (30) de circulation du liquide en reliant mécaniquement ledits au moins deux éléments électriques chauffants (7, 8, 9) et une surface interne du boitier (3) s'étendant en regard du corps de chauffe (11), de façon à former une deuxième liaison mécanique distincte de la première liaison mécanique, **caractérisé en ce que** lesdits au moins deux éléments électriques chauffants (7, 8, 9) concentriques comprennent un élément électrique chauffant (7) externe disposé autour d'un élément électrique chauffant (8, 9) interne, et ledit au moins un élément de liaison mécanique (21) étant agencé au moins en partie entre les éléments électriques chauffants (7, 8, 9) concentriques.

2. Dispositif (1) selon la revendication précédente, dans lequel au moins un des éléments chauffants électriques (7, 8, 9) présente au moins en partie une forme hélicoïdale, et dans lequel ledit au moins un élément de liaison mécanique (21) est agencé entre la surface interne du boitier (3) et au moins un enroulement dudit au moins un élément électrique chauffant (7, 8, 9).

3. Dispositif (1) selon l'une des revendications précédentes, dans lequel le corps de chauffe (11) comporte un socle (5) fixé au boitier (3), le boitier (3) et le socle (5) délimitant, au moins en partie, la chambre (30) de circulation du liquide, et dans lequel la première liaison mécanique est entre lesdits au moins deux éléments électriques chauffants (7, 8, 9) et le socle (5).

4. Dispositif (1) selon la revendication précédente, dans lequel ledit au moins un élément de liaison mécanique (21) est agencé dans la chambre (30) de circulation du liquide à l'opposé du socle (5).

5. Dispositif (1) selon l'une des revendications précédentes, dans lequel ledits au moins deux éléments électriques chauffants (7, 8, 9) s'étendent longitudinalement dans la chambre (30) de circulation du liquide, et dans lequel ledit au moins un élément de liaison mécanique (21) est agencé dans la chambre (30) de circulation du liquide en reliant mécaniquement la surface interne du boitier (3) à une extrémité longitudinale desdits au moins deux éléments électriques chauffants (7, 8, 9).

6. Dispositif (1) selon la revendication précédente, dans lequel le corps de chauffe (11) comprend trois éléments électriques chauffants (7, 8, 9), dont deux éléments électriques chauffants internes ( 8, 9) disposés dans le prolongement axial l'un de l'autre, et un élément électrique chauffant externe (7) disposé autour des deux éléments électriques chauffants internes.

7. Dispositif (1) selon l'une des revendications précédentes, dans lequel ledit au moins un élément de liaison mécanique (21) est réalisé par une pièce intermédiaire (23, 24, 25, 26, 27, 28, 29), agencée entre la surface interne du boitier (3) et le corps de chauffe (11).

8. Dispositif (1) selon la revendication précédente, dans lequel la pièce intermédiaire (23, 24, 25, 26, 27, 28, 29) est au moins en partie élastique et flexible.

9. Dispositif (1) selon l'une des revendications 4 à 6 prise ensemble avec l'une des revendications 7 ou 8, dans lequel la pièce intermédiaire (23 ; 24 ; 25 ; 26 ; 27) comporte :
une base (231 ; 241 ; 251 ; 261 ; 271) agencée transversalement en regard d'une extrémité longitudinale de l'élément ou d'un élément électrique chauffant (7, 8, 9), et
un nombre prédéfini de pattes de contact (233 ; 243, 245 ; 253, 255 ; 263, 265 ; 277, 279) s'étendant à partir de la base (231 ; 241 ; 251 ; 261 ; 271) en direction du corps de chauffe (11) en étant agencées en contact avec les éléments électriques chauffants (7, 8, 9).

10. Dispositif (1) selon les revendications 4 et 9, dans lequel la base (231 ; 241 ; 251 ; 261 ; 271) de la pièce intermédiaire (23 ; 24 ; 25 ; 26 ; 27) est agencée en appui contre la surface interne du boitier (3) à l'opposé du socle (5).

11. Dispositif (1) selon l'une des revendications 9 ou 10, dans lequel le corps de chauffe (11) définit une forme générale creuse et dans lequel :
la base (261) de la pièce intermédiaire (26) est de forme générale annulaire présentant un diamètre intérieur (di) inférieur à un diamètre extérieur (de), et dans lequel
une première série de pattes (263) dites internes s'étend depuis l'intérieur de la forme annulaire vers l'intérieur du corps de chauffe (11) et une deuxième série de pattes (265) dites externes s'étend depuis l'extérieur de de la forme annulaire vers l'extérieur du corps de chauffe (11).

12. Dispositif (1) selon la revendication 9 ou 10, dans lequel au moins certaines pattes (233 ; 245) de la pièce intermédiaire (23 ; 24) sont agencées entre les éléments électriques chauffants (7, 8, 9) concentriques.

13. Dispositif (1) selon la revendication 7 ou 8, dans lequel la pièce intermédiaire (28 ; 29) est réalisée en forme d'agrafe comportant une tête (281 ; 291) agencée en appui sur l'élément électrique chauffant (7) externe et comportant au moins une première patte (283) et une deuxième patte (285) s'étendant depuis la tête (281 ; 291), telles que la première patte (283) est agencée en appui contre l'élément électrique chauffant (9) interne et la deuxième patte (285) est agencée en appui contre la surface interne du boitier (3).

## Patentansprüche

1. Elektrische Heizvorrichtung (1) für eine Flüssigkeit, insbesondere für ein Kraftfahrzeug, aufweisend einen Heizkörper (11) und ein Gehäuse (3), das zumindest teilweise eine Zirkulationskammer (30) für die Flüssigkeit definiert, wobei der Heizkörper (11) mindestens zwei konzentrische elektrische Heizelemente (7, 8, 9) aufweist, die sich in die Zirkulationskammer (30) erstrecken und an einer Innenwand der Vorrichtung befestigt sind, die zumindest teilweise die Zirkulationskammer (30) definiert, um eine erste mechanische Verbindung zu bilden, wobei die elektrische Heizvorrichtung (1) mindestens ein mechanisches Verbindungselement (21) aufweist, das in der Zirkulationskammer (30) angeordnet ist, indem es die beiden elektrischen Heizelemente (7, 8, 9) und eine Innenfläche des Gehäuses (3), die sich dem Heizkörper (11) gegenüber erstreckt, mechanisch verbindet, um eine zweite, von der ersten mechanischen Verbindung verschiedene mechanische Verbindung zu bilden, **dadurch gekennzeichnet, dass** die mindestens zwei konzentrischen elektrischen Heizelemente (7, 8, 9) ein äußeres Heizelement (7), das um ein inneres Heizelement (8, 9) herum angeordnet ist, und das mindestens eine mechanische Verbindungselement (21) zumindest teilweise zwischen den konzentrischen elektrischen Heizelementen (7, 8, 9) angeordnet ist.

2. Vorrichtung (1) nach dem vorhergehenden Anspruch, wobei mindestens eines der elektrischen Heizelemente (7, 8, 9) zumindest teilweise eine schraubenförmige Gestalt aufweist, und wobei das mindestens eine mechanische Verbindungselement (21) zwischen der Innenfläche des Gehäuses (3) und mindestens einer Windung des mindestens einen elektrischen Heizelements (7, 8, 9) angeordnet ist.

3. Vorrichtung (1) nach einem der vorhergehenden Ansprüche, wobei der Heizkörper (11) eine am Gehäuse (3) befestigte Basis (5) aufweist, wobei das Gehäuse (3) und die Basis (5) zumindest teilweise die Flüssigkeitszirkulationskammer (30) definieren, und wobei die erste mechanische Verbindung zwischen den mindestens zwei elektrischen Heizelementen (7, 8, 9) und der Basis (5) besteht.

4. Vorrichtung (1) nach dem vorhergehenden Anspruch, wobei das mindestens eine mechanische Verbindungselement (21) in der Flüssigkeitszirkulationskammer (30) gegenüber der Basis (5) angeordnet ist.

5. Vorrichtung (1) nach einem der vorhergehenden Ansprüche, wobei sich die beiden elektrischen Heizelemente (7, 8, 9) in Längsrichtung in der Flüssigkeitszirkulationskammer (30) erstrecken, und wobei das mindestens eine mechanische Verbindungselement (21) in der Flüssigkeitszirkulationskammer (30) angeordnet ist, indem es die Innenfläche des Gehäuses (3) mit einem Längsende der mindestens zwei elektrischen Heizelemente (7, 8, 9) mechanisch verbindet.

6. Vorrichtung (1) nach dem vorhergehenden Anspruch, wobei der Heizkörper (11) drei elektrische Heizelemente (7, 8, 9) aufweist, darunter zwei innere elektrische Heizelemente (8, 9), die in axialer Verlängerung zueinander angeordnet sind, und ein äußeres elektrisches Heizelement (7), das um die beiden inneren elektrischen Heizelemente herum angeordnet ist.

7. Vorrichtung (1) nach einem der vorhergehenden Ansprüche, wobei das mindestens eine mechanische Verbindungselement (21) aus einem Zwischenteil (23, 24, 25, 26, 27, 28, 29) gebildet ist, das zwischen der Innenfläche des Gehäuses (3) und dem Heizkörper (11) angeordnet ist.

8. Vorrichtung (1) nach dem vorhergehenden Anspruch, wobei das Zwischenteil (23, 24, 25, 26, 27, 28, 29) zumindest teilweise elastisch und flexibel ist.

9. Vorrichtung (1) nach einem der Ansprüche 4 bis 6 in Verbindung mit einem der Ansprüche 7 oder 8, wobei das Zwischenteil (23; 24; 25; 26; 27) aufweist:
* eine Basis (231; 241; 251; 261; 271), die quer gegenüber einem Längsende des Elements oder eines elektrischen Heizelements (7, 8, 9) angeordnet ist, und
* eine vordefinierte Anzahl von Kontaktlaschen (233; 243, 245; 253, 255; 263, 265; 277, 279), die sich von der Basis (231; 241; 251; 261; 271) in Richtung des Heizkörpers (11) erstrecken und in Kontakt mit den elektrischen Heizelementen (7, 8, 9) angeordnet sind.

10. Vorrichtung (1) nach den Ansprüchen 4 und 9, wobei die Basis (231; 241; 251; 261; 271) des Zwischenteils (23; 24; 25; 26; 27) in Anlage an der Innenfläche des Gehäuses (3) gegenüber der Basis (5) angeordnet ist.

11. Vorrichtung (1) nach einem der Ansprüche 9 oder 10, wobei der Heizkörper (11) eine im Allgemeinen hohle Form definiert und wobei:
* die Basis (261) des Zwischenteils (26) von im Allgemeinen ringförmiger Gestalt ist und einen Innendurchmesser (di) aufweist, der kleiner als ein Außendurchmesser (de) ist, und wobei
* sich eine erste Reihe sogenannter innerer Laschen (263) von der Innenseite der Ringform zur Innenseite des Heizkörpers (11) erstreckt und sich eine zweite Reihe sogenannter äußerer Laschen (265) von der Außenseite der Ringform zur Außenseite des Heizkörpers (11) erstreckt.

12. Vorrichtung (1) nach Anspruch 9 oder 10, wobei zumindest einige Laschen (233; 245) des Zwischenteils (23; 24) zwischen den konzentrischen elektrischen Heizelementen (7, 8, 9) angeordnet sind.

13. Vorrichtung (1) nach Anspruch 7 oder 8, wobei das Zwischenteil (28; 29) in Form einer Klemme vorliegt, die einen Kopf (281; 291) aufweist, der in Anlage an dem äußeren Heizelement (7) angeordnet ist und mindestens eine erste Lasche (283) und eine zweite Lasche (285) aufweist, die sich vom Kopf (281; 291) erstrecken, so dass die erste Lasche (283) in Anlage an dem inneren Heizelement (9) und die zweite Lasche (285) in Anlage an der Innenfläche des Gehäuses (3) angeordnet ist.

## Claims

1. Electric heating device (1) for a liquid, in particular for a motor vehicle, comprising a heating body (11), and a casing (3) defining, at least in part, a circulation chamber (30) for the liquid, the heating body (11) comprising at least two concentric electric heating elements (7, 8, 9), extending into the circulation chamber (30) and being fixed to an internal wall of said device defining, at least in part, the circulation chamber (30), so as to form a first mechanical connection, the electric heating device (1) comprises at least one mechanical connection element (21) arranged in the circulation chamber (30) by mechanically connecting said two electric heating elements (7, 8, 9) and an internal surface of the casing (3) extending opposite the heating body (11), so as to form a second mechanical connection distinct from the first mechanical connection, **characterized in that** the at least two concentric electric heating elements (7, 8, 9) comprise an external heating element (7) disposed around an internal heating element (8, 9), and said at least one mechanical connection element (21) being arranged at least in part between the concentric electric heating elements (7, 8, 9).

2. Device (1) according to the preceding claim, wherein said at least one of the electric heating elements (7, 8, 9) has at least in part a helical shape, and wherein said at least one mechanical connection element (21) is arranged between the internal surface of the casing (3) and at least one winding of said at least one electric heating element (7, 8, 9).

3. Device (1) according to one of the preceding claims, wherein the heating body (11) comprises a base (5) fixed to the casing (3), the casing (3) and the base (5) defining, at least in part, the liquid circulation chamber (30), and wherein the first mechanical connection is between said at least two electric heating elements (7, 8, 9) and the base (5).

4. Device (1) according to the preceding claim, wherein said at least one mechanical connection element (21) is arranged in the liquid circulation chamber (30) opposite the base (5).

5. Device (1) according to one of the preceding claims, wherein said two electric heating elements (7, 8, 9) extend longitudinally in the liquid circulation chamber (30), and wherein said at least one mechanical connection element (21) is arranged in the liquid circulation chamber (30) by mechanically connecting the internal surface of the casing (3) to a longitudinal end of said at least two electric heating elements (7, 8, 9).

6. Device (1) according to the preceding claim, wherein the heating body (11) comprises three electric heating elements (7, 8, 9), including two internal electric heating elements (8, 9) disposed in axial extension of one another, and an external electric heating element (7) disposed around the two internal electric heating elements.

7. Device (1) according to one of the preceding claims, wherein said at least one mechanical connection element (21) is made of an intermediate part (23, 24, 25, 26, 27, 28, 29), arranged between the internal surface of the casing (3) and the heating body (11).

8. Device (1) according to the preceding claim, wherein the intermediate part (23, 24, 25, 26, 27, 28, 29) is at least partly elastic and flexible.

9. Device (1) according to any one of claims 4 to 6 taken together with one of claims 7 or 8, wherein the intermediate part (23; 24; 25; 26; 27) comprises:
* a base (231; 241; 251; 261; 271) arranged transversely opposite a longitudinal end of the element or of an electric heating element (7, 8, 9), and
* a predefined number of contact tabs (233; 243, 245; 253, 255; 263, 265; 277, 279) extending from the base (231; 241; 251; 261; 271) towards the heating body (11) and being arranged in contact with the electric heating elements (7, 8, 9).

10. Device (1) according to claims 4 and 9, wherein the base (231; 241; 251; 261; 271) of the intermediate part (23; 24; 25; 26; 27) is arranged in abutment against the internal surface of the casing (3) opposite the base (5).

11. Device (1) according to one of claims 9 or 10, wherein the heating body (11) defines a generally hollow shape and wherein:
* the base (261) of the intermediate part (26) is of generally annular shape having an inner diameter (di) smaller than an outer diameter (de), and wherein
* a first series of so-called internal tabs (263) extends from the inside of the annular shape towards the inside of the heating body (11) and a second series of so-called external tabs (265) extends from the outside of the annular shape towards the outside of the heating body (11).

12. Device (1) according to claim 9 or 10, wherein at least some tabs (233; 245) of the intermediate part (23; 24) are arranged between the concentric electric heating elements (7, 8, 9).

13. Device (1) according to claim 7 or 8, wherein the intermediate part (28; 29) is in the form of a clip comprising a head (281; 291) arranged in abutment on the external heating element (7) and comprising at least a first tab (283) and a second tab (285) extending from the head (281; 291), such that the first tab (283) is arranged in abutment against the internal heating element (9) and the second tab (285) is arranged in abutment against the internal surface of the casing (3).
